# EUROPEAN PATENT APPLICATION

(11) **EP 1 788 324 A2**
(43) Date of publication of application: **23.05.2007**
(21) Application number: 06255864.8
(22) Date of filing: 16.11.2006
(51) Int. Cl.: F25B 17/08, F24F 5/00, F25D 16/00

(54) **Adsorption cooling system and cooling method**

(30) Priority: 16.11.2005 GB 0523367
(71) Applicant: RBR Associates Limited, Suffolk, IP12 1NG (GB)
(72) Inventor: Reader, John, Woodbridge, Suffolk IP12 1NG (GB); Brooks, Nick, Leicestershire, LE13 0PB (GB); Jones, Andrew, Leicestershire, LE13 0PB (GB); Holmes, Mark, Leicestershire, LE13 0PB (GB)
(74) Representative: Exell, Jonathan Mark

(57) **Abstract**

An adsorption cooling system (10) and cooling method as disclosed. An energy storage system (100) is arranged to capture and store energy generated by the adsorption cooling system that is determined to be surplus to the energy needed to meet the current demands for cooling by the adsorption cooling system. The energy storage system is arranged to store said energy for subsequent use.

## Description

### Field of the Invention

The present invention relates to an adsorption cooling system and cooling method that is particularly suitable for use in air conditioning, cooling, water chilling, refrigeration and freezing and is particularly applicable to in-vehicle applications.

### Background to the Invention

Currently commercially available cooling and refrigeration systems are based on vapour-compression refrigeration where the compressor is driven from an engine, either by a direct mechanical drive or by electrical power from a battery. In the case of automotive systems, a typical system for a small commercial panel van with a refrigeration volume of <10m³ for home food deliveries would supply approximately 1.5 kW cooling at -20°C and 2.5kW at 0°C. Such a system can draw 5KW or more of power from the engine and this forms a significant proportion of the energy available from an engine of typically around 100KW.

The most common refrigeration system is the vapour compression system driven by mechanical energy. Cooling is accomplished by evaporation of a liquid refrigerant under reduced pressure and temperature. The fluid enters the compressors at state 1 where the temperature is elevated by mechanical compression (state 2). The vapour condenses at this pressure, and the resultant heat is dissipated to the surrounding area. The high pressure liquid (state 3) then passes through an expansion valve through which the fluid pressure is lowered. The low-pressure fluid enters the evaporator at state 4 where it evaporates by absorbing heat from the refrigerated space, and reenters the compressor where the cycle is repeated.

The performance of the refrigeration system can be easily measured as a Coefficient of Performance (COP). This is a measure of how much heat can be removed from a cold area for each unit of work or energy used. For most automotive refrigeration and cooling units a COP of around 3.0 can be expected.

A number of alternative heat-driven refrigeration technologies have been developed or are under development at the present time. The basis of these heat driven refrigeration technologies is that energy used to drive the refrigeration system is thermal rather than mechanical. In effect the mechanically driven compressor is replaced by a thermally driven system.

The technologies showing the greatest promise as potential refrigeration technologies that can achieve refrigeration temperatures below 0°C are:
o Absorption
o Adsorption
o Chemical Reactions
o Thermo-electric (Peltier)
o Sterling Cycle

Absorption refrigeration system (COP around 1.3): Heat is supplied to a device called a 'vapour generator'. The generation temperature depends on the refrigerant-absorbent 'working' pair, e.g., ammonia/water or water/lithium bromide. A small amount of electricity may be required to circulate the refrigerant between the absorber and the generator. A single-step process has a COP of around 0.6-0.8 and a two-stage process has a COP of around 1.35. These systems have only one moving part (a pump) and can be powered by a low temperature heat supply (down to around 80ºC).

Chemical Reaction refrigeration system (COP around 0.1 - 0.2): A solid-gas adsorption process with a chemical reaction. This is an intermittent system, similar to the absorption cooling cycle. However, for the chemical reaction system, more heat is required to achieve a high kinetic of reaction and the volume of the sorber is changed significantly during operation. These systems have no moving parts except valves and can achieve operating temperatures of less than -20ºC.

Thermoelectric refrigeration cycle (Peltier, COP around 0.5): This system is best suited to small capacity applications. Cooling is achieved by driving an electric current through an electric circuit containing a junction of the different metals. The phenomenon is called the reverse-Seebeck effect. These systems have no working fluid and no moving parts, are quiet, small in size and light weight.

Sterling Cycle Cooling system (COP around 3.0): Suitable for specific applications requiring very low temperatures. The principle of the Stirling refrigeration cycle is based on the changing pressure and temperature of a gas when heated or cooled within a constant volume. Systems are expensive, complicated and not yet commercially available, however, they give very good performance and can reach cryogenic temperature. These systems have high COP, very low refrigeration temperatures, use environmentally friendly working fluids and are light weight.

Adsorption cooling system (COP around 0.3-0.8): is a closed sorption process. There are two main processes inside the system - refrigeration and regeneration.
- During the refrigeration part of the cycle: The refrigerant is vaporized in the generator (or evaporator) and adsorbed by a solid substance with a very high microscopic porosity
- In the regeneration process: The adsorbent is heated until the refrigerant desorbs and goes back to the evaporator, which now acts as a condenser.

Although the COP of heat driven systems is low compared to those of conventionally driven refrigeration systems, they enable use of energy that would otherwise be wasted from the vehicles, engines and the like that make them more practical and advantageous, both in terms of cost reduction and environmental considerations.

Work undertaken by automobile manufacturers looking at thermoelectric technologies has shown that for a typical diesel fuelled engine only 35% of available energy is used for mobility. 65% of the energy from the engine is effectively 'lost' to the environment. 35% of the energy is 'lost' to the engine coolant however this is typically 'low quality' energy (around 80 °C). 25% of the energy is 'lost' to the exhaust gases and this is typically in the form of high quality heat (over 400 °C).

DE10233762 discloses a system of air conditioning based on the adsorption cooling process as outlined above in conjunction with the use of waste energy from the exhaust system of a vehicle. The system divides a vehicle's exhaust into various branches prior to the catalytic converter. Plain zeolite is placed in the path of the exhaust gases in each branch and is used as the adsorbent media. Heat energy from the exhaust is transferred directly to the Zeolite vessels in turn on a cyclical basis for regeneration of the adsorbent. Filtration is installed to remove particulate that will be present in exhaust gases. Cooling of the Zeolite is achieved via the use of cooling energy available from the engine's wet cooling system. Although beneficial in terms of warming the engine up more rapidly from cold, cooling capacity will be limited as the normal running temperature of the engine coolant will be around 100°C. Whilst this would seem an obvious method of cooling, this thermal system must be removed from the cooling fluid prior to its re-use for its primary cooling function in the engine if the running and performance of the engine are not to be affected. In practice, use of this method would require a larger capacity engine cooling system with associated cost, fuel use and space implications.

Whilst an inline system such as that disclosed in DE 10233762 would make best use of available heat by being in the exhaust gas path, such a system would be complex, require significant modification of exhaust systems and exhaust manifold in the engine bay (as that is where it would have to be located). Not only would this be extremely expensive and require re-design of vehicle engines and exhaust systems but it would also remove heat from the exhaust system prior to the catalytic converter; this would be deleterious to engine performance. As such, the system is unlikely to be acceptable as a replacement to existing systems.

### Statement of Invention

According to an aspect of the present invention, there is provided an adsorption cooling system including an energy storage system arranged to capture and store energy generated by the adsorption cooling system that is determined to be surplus to the energy needed to meet the current demands for cooling by the adsorption cooling system, the energy storage system being arranged to store said energy for subsequent use.

Preferably, the adsorption cooling system is powered at least in part by waste energy.

The energy storage system may be coupled to an air conditioning system to provide substantially instantaneous air conditioning on demand. The energy storage system may be triggerable from a remote device.

The adsorption cooling system may be coupled to the air conditioning system to provide air conditioning under regular usage, the energy storage device being arranged to provide a boost to augment air conditioning provided by said adsorption cooling system and/or to provide air conditioning when said adsorption cooling system is not operational.

The energy storage system may be coupled to a refrigeration system to provide substantially instantaneous refrigeration on demand.

The adsorption cooling system may be coupled to the refrigeration system to provide refrigeration under regular usage, the energy storage device being arranged to provide a boost to augment refrigeration by said adsorption cooling system and/or to provide refrigeration when said adsorption cooling system is not operational.

The energy storage system may be coupled to an alternate cooling source and is controllable to provide energy or cooling to said alternate cooling source.

The adsorption cooling system may include one or more adsorbent containing vessels. The adsorbent may be a zeolite. The zeolite may be mixed with a thermally conductive material.

One or more heat transfer elements may project into the adsorbent. The heat transfer element may be part of the adsorbent containing vessel.

The energy storage system may include a adsorbent containing vessel.

The energy storage system may include a pressurized vessel.

The adsorption cooling system is preferably powered by waste heat energy from an engine's exhaust gasses. At least part of the adsorption cooling system may be sited remotely of the engine's exhaust, the adsorption cooling system including heat transfer means for transferring heat from the exhaust to the adsorption cooling system.

The adsorption cooling system may be fitted in a vehicle.

According to another aspect of the present invention, there is provided a method of providing cooling comprising:
operating a cooling system to provide cooling;
capturing energy from said cooling system in excess of that needed to provide the cooling; and,
storing the captured energy for subsequent access on demand.

Preferably, the cooling system is an adsorption cooling system and the step of operating the cooling system includes capturing waste energy from an engine and converting the waste energy for powering the cooling system.

The present invention seeks to provide an adsorption cooling system that utilizes waste heat energy produced from an engine or the like for cooling functions but which also captures excess waste energy that is not required for refrigeration in a storage system enabling a boost to cooling capabilities on demand (even when the main system is not active) or alternatively provide cooling, refrigeration, freezing or the like to other secondary functions. Preferred embodiments seek to reduce efficiency of the adsorption cooling system resulting in a reduced energy requirement so that more excess energy is available for capture.

Embodiments of the present invention include an air conditioning system, a low-level cooling system, a water chiller, a freezing system and a refrigeration system

### Brief Description of the Drawings

Embodiments of the present invention will now be described in detail, by way of example only, with reference to the accompanying drawings in which:
Figure 1 is a schematic diagram illustrating aspects of a cooling system suitable for use by an embodiment of the present invention;
Figure 2 is the schematic diagram of Figure 1 annotated to illustrate selected operational aspects;
Figure 3 is a schematic diagram illustrating aspects of a preferred embodiment of the present invention in use with the system of Figures 1 and 2;
Figure 4 is the schematic diagram of Figure 3 in which the storage system is coupled to an alternate cooling source;
Figure 5 is a schematic diagram of an embodiment of the present invention; and,
Figures 6a and 6b are an illustration of a part of a heat transfer element for use in embodiments of the present invention.

### Detailed Description

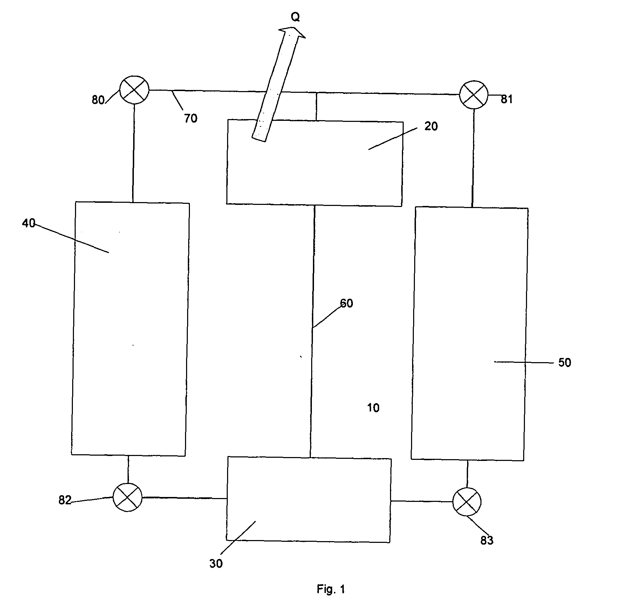

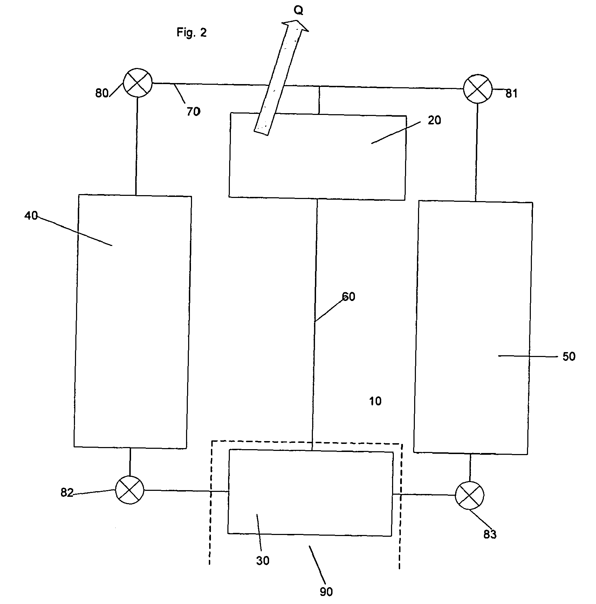

Figure 1 is a schematic diagram illustrating aspects of a cooling system suitable for use by an embodiment of the present invention and Figure 2 is the schematic diagram of Figure 1 annotated to illustrate selected operational aspects.

The cooling system 10 includes a condenser 20, an evaporator 30 and first and second zeolite containing vessels 40, 50. The condenser 20 is connected to the evaporator 30 via an ejector valve 60. The system 10 is interconnected by piping 70 which includes first, second, third and fourth control valves 80, 81, 82, 83. The evaporator 30 is positioned within a refrigeration compartment or air conditioning supply duct according to the application. The Evaporator may also be positioned remote to the volume to be cooled with heat transfer between the evaporator and volume to be cooled being achieved via a heat exchange system.

In operation, as is shown in Figure 2, the arrangement of valves 80-83 allows the system 10 to continually work as a heat pump, removing heat (Q) from the refrigeration compartment (or vehicle cabin) 90 via the evaporator 30 and ejecting heat via the condenser 20.

The system 10 cycles through alternate states. In each state, one of the zeolite containing vessels 40, 50 is heated and the other is cooled.

In the first state, the second and third valves 81, 82 are closed and the first and fourth valves 80, 83 are opened. Heat obtained from exhaust gasses is applied to the first zeolite containing vessel 40. The water that has been adsorbed into the zeolite in the first zeolite containing vessel 40 is evaporated by the heat and is forced by steam pressure into the condenser 20. Pressure within the condenser 20 is maintained at a predetermined level to cause the water vapour to condense.

Heat energy is removed from the condenser 20 by forced cooling of the condenser 20 via exposure to air moving around the vehicle and/or by forced air cooling via a conventional fan.

Water that has condensed in the condenser 20 is forced under pressure through the ejector valve 60 into the evaporator 30 which is maintained at a low (sub-atmospheric) pressure. The low pressure causes the water to evaporate in the evaporator 20 to become water vapour and draws heat energy (Q) away from the refrigeration compartment or vehicle cabin 90.

Zeolite in the second zeolite containing vessel 50 adsorbs the water vapour from the evaporator 30 by diffusion. As the zeolite adsorbs the water vapour, the partial pressure in the evaporator 30 decreases, leading to faster evaporation of the water and thus faster water diffusion and adsorption by the zeolite in the second zeolite containing vessel 50. Therefore, in the first state, water is evaporated from zeolite in the first zeolite containing vessel 40 and adsorbed in the second zeolite containing vessel 50. Once the water in the first zeolite containing vessel 40 has been completely removed by evaporation, then the system cycles to the second state. The point at which all of the water has been removed is detected by pressure measurement or some other suitable means.

In the second state, the first and fourth valves 80, 83 are closed and the second and third valves 81, 82 are opened. The heat obtained from exhaust gasses is applied to the second zeolite containing vessel 50. The system 10 now operates as in the first state, but with the water now being evaporated from the second zeolite containing vessel 50 and absorbed in the first zeolite containing vessel 40. The evaporator 30 and condenser 40 act as they did in the first state, with heat energy being extracted from the refrigeration compartment 90 to the evaporator 30 and ejected to the environment via the condenser 20.

It will be appreciated that heat applied to the zeolite containing vessels 40, 50 could be obtained from sources other than exhaust gasses, although it is preferable to capture waste heat for use in embodiments of the present invention.

Zeolites are framework silicates consisting of interlocking tetrahedrons of SiO₄ and AlO₄. In order to be a zeolite the ratio (Si +Al)/O must equal ½.

Although the cooling system of Figure 1 and 2 are based on a zeolite-water working pair, many other working pairs are possible and within the scope of the presently claimed invention. Indeed, the adsorbent need not be a zeolite. It will be understood by the skilled addressee that different working pairs will suit different applications and environments and can be selected accordingly.

Examples of working pairs include:
zeolite/water;
silica gel/water; and,
activated carbon/methanol.

Other examples of working pairs are disclosed in the document "Adsorption Refrigeration - An Efficient Way To Make Good Use Of Waste Energy And Solar Energy" by R.Z Wang and R.G Olivieira, International Sorption Heat Pump Conference June 22-24, 2005; Denver, CO, USA ISHPC - 101 K - 2005 http://www.sjtuirc.sjtu.edu.cn/news/ISHPC%20-%20101%20K.pdf, a copy of which is herein incorporated by reference.

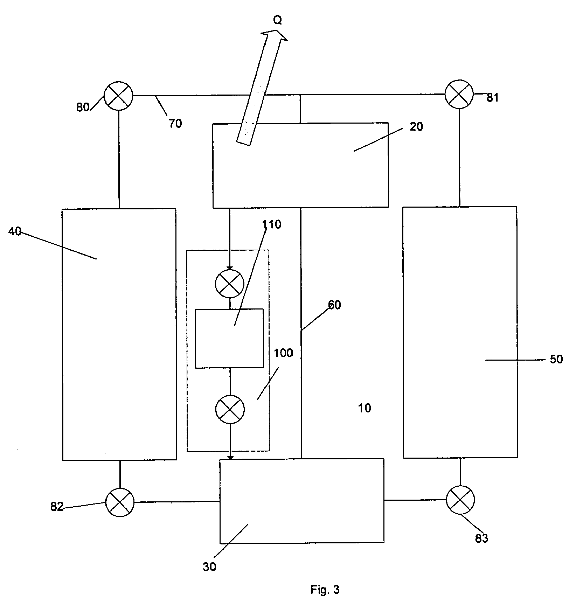

Figure 3 is a schematic diagram illustrating aspects of a preferred embodiment of the present invention in use with the system of Figures 1 and 2.

A storage system 100 is coupled to the system 10 enabling energy not immediately required for the primary function of the cooling system (air conditioning and/or refrigeration) to be stored for immediate or later use in the primary (air conditioning/refrigeration) or one or more secondary functions.

The storage system 100 includes a secondary pressure vessel 110 into which surplus condensate at pressure is stored ready for immediate expansion through the expansion valve 60 into the evaporator 30 to provide instantaneous cooling.

In this manner, a relatively recent journey in the vehicle should be sufficient to pre-charge the storage system 100 enabling air conditioning/refrigeration to be available right at the start of the next trip (rather than some 2-10 minutes after the start of the trip in engine powered air conditioning/refrigeration systems that rely on the engine running for some time to reach operating temperature).

The condenser 20 and evaporator 30 can optionally be combined if continuous cycling is not required. The water can be driven off the adsorbent through the condenser and into a container as condensate. The adsorber is then isolated and cooled down. The valve is then opened and the condensate expanded back through the tube (condenser/evaporator) where it expands to create a cooling effect. This container could be the storage system 100.

Additionally, a conventional expansion valve is not necessarily required. For water, it could be detrimental as the small orifice size can choke the flow. As an alternative a capillary tube or similar could be used.

In certain refrigerants such as water, operation in a vacuum may improve operation and performance. The vacuum allows the water to be turned to vapor much more readily.

Alternatively or in addition, the storage system 100 may be coupled to an alternate cooling source 120, as is shown in Figure 4, to enable cooling for a secondary function such as a refrigerated box in boot or cabin of car maintained at lower temperature than the car interior for keeping food or drinks frozen or cold.

In one embodiment, release of stored energy by the storage system 100 is controlled via a remote controller 130 on a key fob enabling air conditioning to be activated for pre-cooling of the vehicle before passengers even enter the vehicle.

In a refrigerated delivery vehicle, a large proportion of energy is wasted through opening and closing of the doors and this puts a heavy load on a conventional vapour-compression system. By having a readily available instantaneous stored source of energy for supplementary cooling at these times, the temperature within the vehicle may be better controlled.

In a typical refrigerated van of engine capacity 100KW, up to 30 KW may be available as waste energy for use by the cooling system for primary and secondary functions. If we assume 10KW for the primary cooling function then up to 20KW should be available for secondary purposes.

As an alternative or an addition to a pressure vessel 110, additional zeolite (or other adsorbent) containing vessel(s) may be used by the storage system 100. Separate zeolite containing vessels could be charged up during normal running and then made available for 'abnormal' cooling purposes. This extra Zeolite capacity would not normally be included in the standard cycle of the cooling system and could be used for example, to provide additional cooling of the main zeolite containing vessels 30, 40 whilst the vehicle is stationary and no cooling is available from moving air.

It will be appreciated that the more efficient the primary cooling system is, the greater the amount of excess energy will be available to the storage system 100. Whilst embodiments of the present invention are suitable for use with known cooling systems such as those described above in the background to the invention section, various improvements to adsorption cooling systems are discussed below that may be used alone or in combination to improve efficiency of such systems. Indeed, it will be appreciated that the improvements do not have to be used in combination with storage systems according to embodiments of the present invention and could be used to improve performance of known adsorption cooling systems by themselves.

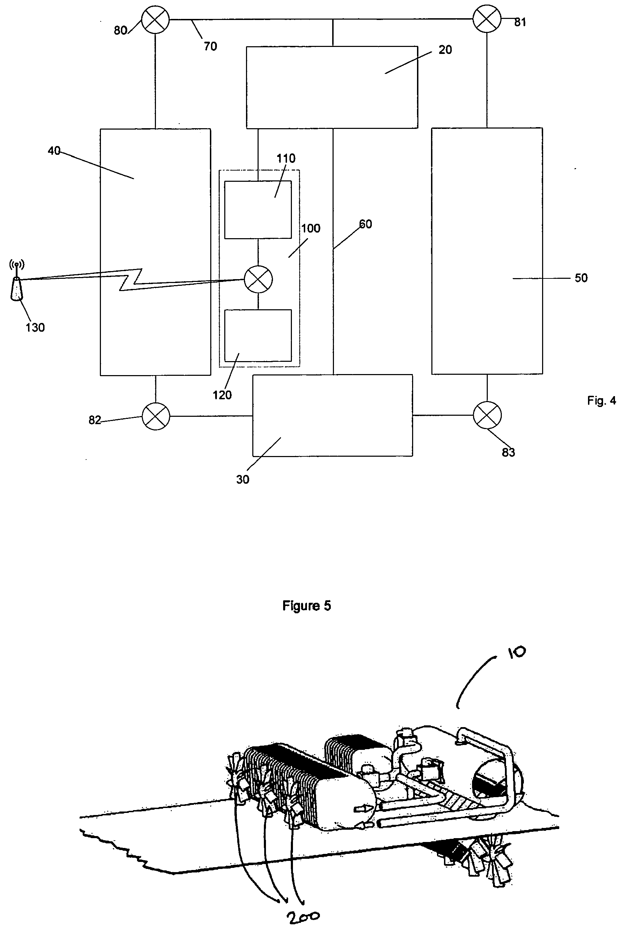

In a preferred embodiment of the present invention, the system 10 is sited remotely from the path of exhaust gasses, as is shown in Figure 5. A heat exchanger is introduced into the exhaust path (preferably after any catalytic converter) to capture heat for applying to the zeolite containing vessels 40, 50.

Although it would seem that close proximity between the vehicle exhaust and the zeolite vessels is preferential, there are practical limitations with such a system where space within the engine compartment and under the vehicle are concerned. There may indeed be practical benefits in situating the Zeolite containing vessels 40, 50 and associated systems remotely from the exhaust, transferring the energy via some heat transfer media and a secondary heat exchanger.

Particularly in the case of vehicles where aerodynamics is less important (vans, lorries etc), it is preferable to site the system 10 and particularly the zeolite containing vessels 40, 50 in a position on the vehicle so as to be exposed to ambient air surrounding the vehicle and preferably be in the path of air passing over/around the vehicle whilst it is in motion. Optionally, fans 200 or other cooling systems may be mounted around the system 10 and zeolite containing vessels 30, 40 to increase the amount of air passing around them.

Zeolites are characterized by their ability to desorb and adsorb water without damage to their crystal structures. Cation-containing zeolites are extensively used as desiccants due to their high affinity for water and as such are ideally suited to the application in question. However, Zeolites are poor conductors of heat energy having a K value of around 1 W·m-1·K-1. In cooling applications, this characteristic is detrimental to energy transfer both into and out of the Zeolite and it follows that unless additional energy is used, Heat/Cool - Cool/Heat cycle times will be significant leading to a potential reduction in performance.

In one embodiment, to improve the thermal transfer into and out of the Zeolite (which itself has relatively poor thermal conductivity) a proportion of a second particulate, metallic or otherwise, is added by mixing with the zeolite in the vessel. The second particulate, does not modify the zeolite structure or operation but preferably has a high thermal conductivity. With a material such as copper (or other suitable conductive material) with thermal conductivity orders of magnitude higher than Zeolite, a relatively small proportion of filler will significantly improve thermal conductivity without compromising the core function of the Zeolite adsorbent. Improving thermal conductivity will lead to better performance of the system as a whole. Thermal conductivity of the Zeolite could be improved by the addition of high conductivity particulate and/or modification of the ceramic structure itself (grafting, alloying etc.).

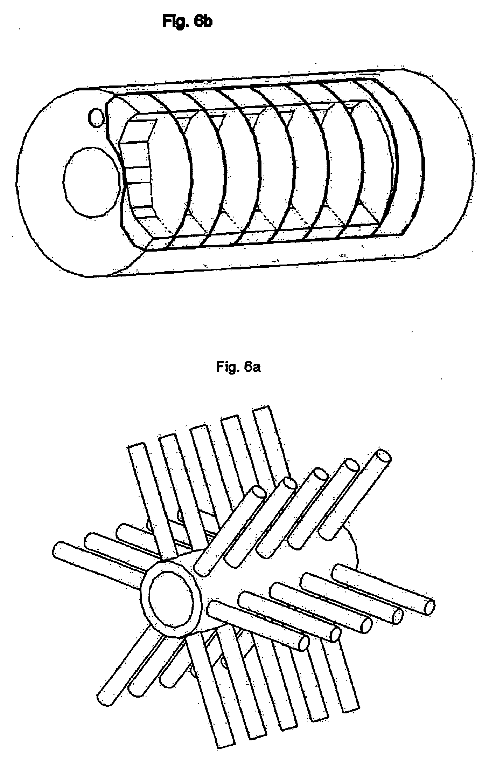

In one embodiment, heat transfer can be optimized by surrounding the zeolite in the zeolite containing vessels 40, 50 with one or more heat transfer elements 300, as is illustrated in Figures 6a-. The heat transfer elements may be embedded within the walls of the respective zeolite containing vessels 40, 50 or they could be within the zeolite containing vessels 40, 50. The heat transfer elements are formed of a highly conductive material or may optionally contain a heat conducting fluid to enable heat to penetrate (or be extracted from) the zeolite more quickly.

Example heat transfer element configurations that could be used include a 'hedgehog' illustrated in Figure 6a or coil with large surface area embedded in the Zeolite mass as is illustrated in Figure 6b. Although this system would use valuable space that could be used for Zeolite, there will be a balance point at which it will be advantageous to use it.

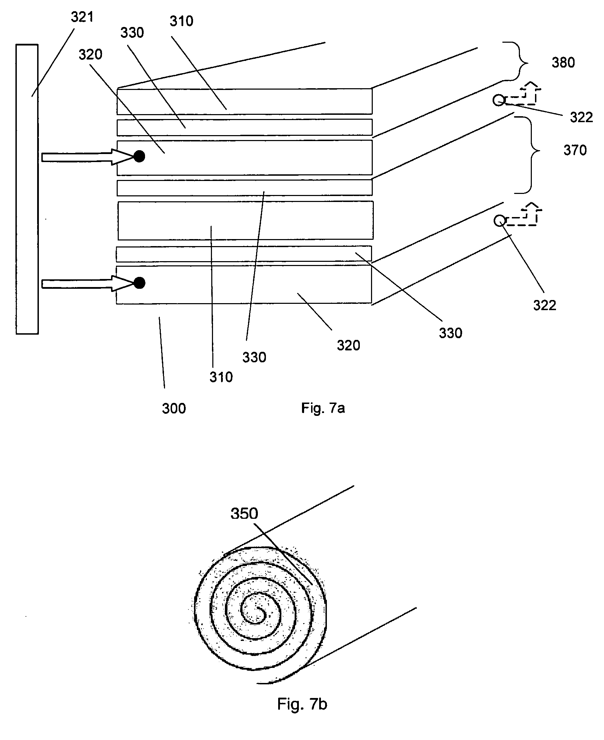

Effective heat transfer into and out of the adsorbent mass is important to the efficient function of an adsorption based cooling system. A single mass of adsorbent means that thermal transfer to the centre of the mass could be slow. One embodiment of the present invention for improving heat transfer is simply illustrated in the Figures 7a and 7b.

In figure 7a, a laminated structure 300 is shown in which layers of adsorbent material 310 are positioned in close proximity to the energy source flow and/or transfer medium (exhaust gases for example) 320. The energy source flow is fed via inputs 321 and output at outputs 322. The layers of adsorbent material are separated from the energy source 320 by conductive layers 330 to improve energy transfer. The conductive layers 330 could be non metallic if they are thin enough as to render the thermal conductivity properties insignificant.

It will be appreciated that conductor-adsorbent-conductor layers are used either side of energy source flow 320 to form the laminated structure 300. As many sandwiches as is desired can be used to form the laminated structure 300. In the illustrated embodiment, a full sandwich 370 and a partial sandwich 380 is shown, although any number of full/partial sandwiches could be used.

It will be appreciated that if this laminated structure 300 is rolled into a spiral form 350 as illustrated in Figure 7b, then a significant mass of adsorbent material may be contained. Heat transfer into and out of the mass housed in this way would be far more efficient than if the mass were to be contained within a single body.

If the spiral 350 is itself housed in a container and means established for connection to the respective process circuits at each end such a system could be used as a high efficiency heat exchanger within the adsorption cooling system of the present invention.

Although the system described in Figures 1 and 2 only used 2 zeolite containing vessels, it will be appreciated that any number of zeolite containing vessels could be used. There may be benefit in flexibility and responsiveness in having more vessels that could be controlled and used separately.

As indicated previously, other working pair arrangements than zeolite-water are useable in all of the above-described embodiments.

It will be appreciated that although embodiments of the present invention are directed to refrigeration, they could also be temperature controlled to encompass freezing. Whilst the described embodiments of the present invention are directed to excess energy capture of adsorption based systems, similar arrangements can be envisaged for other cooling systems.

## Claims

1. An adsorption cooling system and including an energy storage system arranged to capture and store energy generated by the adsorption cooling system that is determined to be surplus to the energy needed to meet the current demands for cooling by the adsorption cooling system, the energy storage system being arranged to store said energy for subsequent use.

2. An adsorption cooling system as claimed in claim 1, wherein the energy storage system is coupled to an air conditioning system to provide substantially instantaneous air conditioning on demand.

3. An adsorption cooling system as claimed in claim 2, wherein the energy storage system is triggerable from a remote device.

4. An adsorption cooling system as claimed in claim 2 or 3, wherein the adsorption cooling system is coupled to the air conditioning system to provide air conditioning under regular usage, the energy storage device being arranged to provide a boost to augment air conditioning provided by said adsorption cooling system and/or to provide air conditioning when said adsorption cooling system is not operational.

5. An adsorption cooling system as claimed in claim 1, wherein the energy storage system is coupled to a refrigeration/freezing system to provide substantially instantaneous refrigeration/freezing on demand.

6. An adsorption cooling system as claimed in claim 5, wherein the adsorption cooling system is coupled to the refrigeration/freezing system to provide refrigeration/freezing under regular usage, the energy storage device being arranged to provide a boost to augment refrigeration/freezing by said adsorption cooling system and/or to provide refrigeration/freezing when said adsorption cooling system is not operational.

7. An adsorption cooling system as claimed in any preceding claim, wherein the energy storage system is coupled to an alternate cooling source and is controllable to provide cooling to said alternate cooling source.

8. An adsorption cooling system as claimed in any preceding claim, including one or more adsorbent containing vessels.

9. An adsorbent cooling system as claimined in claim 8, wherein the adsorbent comprises zeolite.

10. An adsorption cooling system as claimed in claim 8 or 9, wherein the adsorbent is mixed with a thermally conductive material.

11. An adsorption cooling system as claimed in claim 8, 9 or 10, further comprising one or more heat transfer elements projecting into the adsorbent.

12. An adsorption cooling system as claimed in claim 11, wherein the heat transfer element is part of the adsorbent containing vessel.

13. An adsorption cooling system as claimed in claim 8, wherein the adsorbent containing vessel includes a laminated structure comprising one or more sandwiches interposed between flows of energy, each sandwich comprising a layer of adsorbent material sandwiched between layers of a conductive material, the laminate being arranged such that at least one of the layers of conductive material being substantially adjacent a flow of energy to be captured.

14. An adsorption cooling system as claimed in claim 13, wherein the laminate is rolled in a spiral, the flows of energy passing through the length of the roll.

15. An adsorption cooling system as claimed in any preceding claim, wherein the energy storage system includes an adsorbent containing vessel.

16. An adsorption cooling system as claimed in any preceding claim, wherein the energy storage system includes a pressurized vessel.

17. An adsorption cooling system as claimed in any of the preceding claims, wherein the adsorption cooling system is powered at least in part by waste heat energy.

18. An adsorption cooling system as claimed in claim 17, wherein the adsorption cooling system is arranged to capture the waste heat energy from an engine's exhaust gasses.

19. An adsorption cooling system as claimed in claim 18, wherein at least part of the adsorption cooling system is sited remotely of the engine's exhaust, the adsorption cooling system including heat transfer means for transferring heat from the exhaust to the adsorption cooling system.

20. A vehicle including an adsorption cooling system as claimed in any preceding claim.

21. A method of providing cooling comprising:
operating a cooling system to provide cooling;
capturing energy from said cooling system in excess of that needed to provide the cooling; and,
storing the captured energy for subsequent access on demand.

22. A method according to claim 21, wherein the cooling system is an adsorption cooling system and the step of operating the cooling system includes capturing waste energy from an engine and converting the waste energy for powering the cooling system.
